# EUROPÄISCHE PATENTSCHRIFT

(11) **EP 2 559 910 B1**
(45) Veröffentlichungstag und Bekanntmachung des Hinweises auf die Patenterteilung: **14.11.2018**
(21) Anmeldenummer: 12005189.1
(22) Anmeldetag: 13.07.2012
(51) Int. Cl.: F16F 1/36, F16F 1/393, F16M 11/04

(54) **Adapter, dessen Verwendung und Aggregatelager mit Adapter**
Adapter, use of same and aggregate bearing with adapter
Adaptateur, son utilisation et palier d'agrégat avec adaptateur

(30) Priorität: 17.08.2011 DE 102011110490
(43) Veröffentlichungstag der Anmeldung: 20.02.2013
(73) Patentinhaber: Vibracoustic GmbH, 64293 Darmstadt (DE)
(72) Erfinder: Simuttis, Arnold, Dr., 55545 Bad Kreuznach (DE); Dietl, Alfred, 79418 Schliengen (DE); Kreckel, Reinhold, 69469 Weinheim (DE)
(74) Vertreter: Flügel Preissner Schober Seidel

(56) Entgegenhaltungen:
- EP-A2- 1 038 712
- DE-A1- 3 146 333
- DE-A1- 3 437 784
- DE-A1- 4 412 879
- DE-A1- 19 731 128
- DE-A1- 19 915 798
- DE-A1-102008 007 137
- DE-U- 1 943 618
- DE-U1- 29 601 355
- DE-U1-202005 016 961
- FR-A1- 2 809 996
- JP-A- H10 299 833
- US-A- 5 129 479
- US-A- 6 105 548
- US-B1- 6 270 051

## Beschreibung

### Technisches Gebiet

Die Erfindung betrifft einen Adapter, dessen Verwendung und ein Aggregatelager mit einem Adapter.

### Stand der Technik

Adapter sind allgemein bekannt und können zur Verbindung verschiedener mechanischer Bauteile zur Anwendung gelangen; bei einem Adapter handelt es sich um eine technische Einrichtung zur Anpassung zwischen zwei miteinander zu verbindenden Bauteilen mit unterschiedlicher Schnittstelle.

Beispiele für mechanische Adapter sind z. B. Stativgewinde-Adapter, Adapter für Objektive und Okulare oder Adapter für Schlauchverbindungen unterschiedlicher Nennweite. Manche miteinander zu verbindende Bauteile können, z. B. aus Platzgründen, nicht direkt miteinander verbunden werden. In einem solchen Fall kann es beispielsweise erforderlich sein, die beiden Bauteile versetzt zueinander anzuordnen, wobei diese versetzte Anordnung dann durch die Verwendung eines entsprechenden Adapters ermöglicht wird.

DE 29601355 U1 beschreibt ein Verbindungsknoten für Baukonstruktionen, der sich aus den Knotenelementen zusammensetzt. Die Knotenelemente weisen Verbindungszapfen auf, mittels welchen der Verbindungsknoten an anderen Elementen angebracht werden kann.

DE 314 63 33 A1 zeigt ein Lagerblock mit zwei Linearlagerstellen, die bei einer Oldham- bzw. einer Universalkupplung Anwendung finden kann. Der Lagerblock weist zwei Nuten auf, in denen Spurstangen linear beweglich gelagert werden können.

DE 10 2008 007 137 A1 befasst sich mit einem hydraulisch gedämpften Aggregatlager. Dabei sind ein Traglager und ein Auflager durch eine Tragfeder aus gummielastischem Werkstoff miteinander verbunden.

DE 19 915 798 A1 befasst sich mit einem schaltbaren hydraulisch dämpfenden Lager, das mit einem Ventil versehen ist. EP 1 038 712 A2 befasst sich mit einem Motorlager und dessen Befestigung.

US 5 129 479 A offenbart ein Adapter für ein Aggregatelager und wird als nächstliegender Stand der Technik gegenüber dem Gegenstand des Anspruchs 1 angesehen.

Der Erfindung liegt die Aufgabe zugrunde, einen Adapter, dessen Verwendung und ein Aggregatelager mit einem solchen Adapter zu zeigen, wobei der Adapter die Montage von Bauteilen in beengte Einbauräume ermöglichen/vereinfachen soll.

### Darstellung der Erfindung

Diese Aufgabe wird erfindungsgemäß mit den Merkmalen der unabhängigen Patentansprüche gelöst. Auf vorteilhafte Ausgestaltungen nehmen die Unteransprüche Bezug.

Zur Lösung der Aufgabe ist ein Adapter vorgesehen, umfassend ein Kupplungsteil mit einer ersten und einer zweiten Befestigungseinrichtung, die im Wesentlichen senkrecht zueinander angeordnet sind. Das Kupplungsteil umfasst einen Tragarm mit zumindest einer dritten Befestigungseinrichtung, die im Wesentlichen senkrecht zur ersten Befestigungseinrichtung angeordnet ist. Die dritte Befestigungseinrichtung ist durch zumindest ein Durchgangsloch gebildet, mittels dessen ein Maschinenelement befestigbar ist. Das Kupplungsteil umfasst eine erste Mutter, die im Kupplungsteil im Wesentlichen zentral und drehfest angeordnet und mit der zweiten Befestigungseinrichtung in Eingriff bringbar ist. Das Kupplungsteil, die erste Mutter und der Tragarm weisen jeweils eine Bohrung auf, wobei die Bohrungen deckungsgleich und von der zweiten Befestigungseinrichtung zur Festlegung von Kupplungsteil, erster Mutter und Tragarm aneinander durchdrungen sind.

Die miteinander zu verbindenden Bauteile können durch einen solchen Adapter versetzt zueinander angeordnet werden. Dazu werden die erste Befestigungseinrichtung mit einem ersten Bauteil und die zweite Befestigungseinrichtung mit einem zweiten Bauteil verbunden. Die Geometrie der miteinander mittels des Adapters verbundenen Bauteile kann dadurch besser an die Geometrie des Einbauraums angepasst werden. Wenn der Einbauraum zum Beispiel in seiner Höhe begrenzt ist, können die Bauteile durch den Adapter derart miteinander verbunden werden, dass sie im Wesentlichen senkrecht zueinander angeordnet sind, deshalb insgesamt nur eine geringe Höhe aufweisen und stattdessen breiter bauen.

Bei dem Adapter handelt es sich dann um einen Winkeladapter, bei dem die Befestigungseinrichtungen rechtwinklig zueinander angeordnet sind. Für manche Anwendungsfälle/Einbausituation ist das, wie nachfolgend noch erläutert wird, von hervorzuhebendem Vorteil.

Zumindest eine der Befestigungseinrichtungen kann durch eine Schraube gebildet sein. Derartige Befestigungseinrichtungen sind in vielen unterschiedlichen Ausführungen, zum Beispiel in vielen unterschiedlichen Größen und Festigkeiten, kostengünstig verfügbar. Außerdem ist die Montage des Adapters mit Standard-Werkzeug einfach durchführbar.

Für viele Anwendungsfälle kann es vorteilhaft sein, dass beide Befestigungseinrichtungen jeweils durch eine Schraube gebildet sind. Die Gegenstücke zu den Schrauben sind dann Muttern oder Gewindesacklöcher, in denen die Schrauben aufgenommen werden. Dadurch kann der Adapter einfach an den miteinander zu verbindenden Bauteilen befestigt werden.

Alternativ kann die erste Befestigungseinrichtung durch eine Durchbrechung zur Durchführung eines Gewindebolzens gebildet sein. Ein derart gestalteter Adapter kann auf einen Gewindebolzen eines Bauteils aufgesetzt werden, wobei die Verbindung des Bauteils mit dem Adapter dann dadurch erfolgt, dass auf den Gewindebolzen eine Mutter aufgedreht und der Adapter dadurch am Bauteil befestigt wird.

Die erste Befestigungseinrichtung muss zur Befestigung des Adapters am ersten der zu verbindenden Bauteile zugänglich sein.

Entweder wird die erste Befestigungseinrichtung, wie zuvor bereits ausgeführt, durch eine Schraube gebildet. Im Inneren des Adapters muss der Schraubenkopf der Schraube für ein passendes Werkzeug zugänglich sein, um die Verbindung mit dem ersten Bauteil herstellen zu können.

Oder das erste Bauteil weist demgegenüber einen Gewindebolzen auf, der die Durchbrechung des Adapters durchdringt. In einem solchen Fall muss der Adapter durch das Aufdrehen einer Mutter auf den Gewindebolzen befestigt werden. Das erfolgt z. B. durch einen Steckschlüssel, der die zweite Mutter außenumfangsseitig umschließt. Um die Zugänglichkeit zum Schraubenkopf oder zu der zweiten Mutter zu gewährleisten, kann die erste Mutter erst dann in das Kupplungsteil eingesetzt werden, wenn der Adapter mittels der ersten Befestigungseinrichtung mit dem ersten Bauteil verbunden ist.

Die drehfeste Anordnung der ersten Mutter im Kupplungsteil ist von Vorteil, weil dadurch die Montage des zweiten Bauteils mittels der zweiten Befestigungseinrichtung vereinfacht ist. Die erste Mutter nimmt dadurch stets eine lagerichtige Position bezogen auf die zweite Befestigungseinrichtung ein, so dass beispielsweise die als zweite Befestigungseinrichtung ausgebildete Schraube problemlos mit dem Gewinde der ersten Mutter in Eingriff bringbar ist.

Um eine drehfeste Anordnung der ersten Mutter im Kupplungsteil zu erreichen, kann es vorgesehen sein, dass die erste Mutter polygonförmig ausgebildet ist. Dadurch sind eine unerwünschte Verdrehung der ersten Mutter innerhalb des Kupplungsteils und dadurch eine erschwerte Montage des Adapters ausgeschlossen.

Der Adapter umfasst zusätzlich zum Kupplungsteil einen Tragarm, mit zumindest einer dritten Befestigungseinrichtung, die im Wesentlichen senkrecht zur ersten Befestigungseinrichtung angeordnet ist. Der Adapter kann durch den Tragarm noch besser an die jeweiligen Gegebenheiten des Anwendungsfalles angepasst werden. Es besteht die Möglichkeit, ein und dasselbe Kupplungsteil mit unterschiedlich gestalteten Tragarmen zu verbinden, wobei die Tragarme z. B. mit unterschiedlich gestalteten Befestigungsflanschen ausgeführt sind.

Abhängig vom jeweiligen Anwendungsfall können die dritten Befestigungseinrichtungen in Anzahl und Gestalt variiert sein. Für viele Anwendungsfälle kann die dritte Befestigungseinrichtung durch zumindest ein Durchgangsloch gebildet sein, durch das ein Bauteil befestigbar ist.

Reicht ein Durchgangsloch zur Befestigung des Bauteils, z. B. aus Festigkeitsgründen, nicht aus, kann der Tragarm vier Durchgangslöcher aufweisen. Der Tragarm kann plattenförmig ausgebildet sein. Das zweite Bauteil hat in einem solchen Fall eine ebene Anlagefläche, die am plattenförmigen Tragarm zur Anlage gelangt, wobei das zweite Bauteil z. B. vier Gewindebolzen aufweist, die die Durchgangslöcher durchdringen und mit Muttern am Tragarm befestigt werden.

Der Tragarm kann eine im Wesentlichen kuppelförmige Ausnehmung aufweisen, die das Kupplungsteil außenumfangsseitig umschließt, wobei der Tragarm mittels der zweiten Befestigungseinrichtung am Kupplungsteil festlegbar ist. Der Adapter kann durch eine derartige Ausgestaltung modular zusammengesetzt sein. Die kuppelförmige Ausnehmung ansonsten unterschiedlich gestalteter Tragarme kann über das Kupplungsteil gestülpt werden und durch die zweite Befestigungseinrichtung, zum Beispiel in Form einer Schraube, mit dem Kupplungsteil verbunden werden. Zur Befestigung des Tragarms am Kupplungsteil mittels der Schraube ist die erste Mutter vorgesehen, in deren Innengewinde das Außengewinde der Schraube eingreift.

Das Kupplungsteil, die erste Mutter und der Tragarm weisen jeweils eine Bohrung auf, wobei alle Bohrungen deckungsgleich und von der zweiten Befestigungseinrichtung zur Festlegung von Kupplungsteil, erster Mutter und Tragarm aneinander durchdrungen sind. Zur Festlegung der genannten Teile aneinander müssen die Bohrungen der Teile fluchtend zueinander angeordnet sein. Diese fluchtende Zuordnung kann dadurch einfach erreicht werden, wenn das Kupplungsteil, die erste Mutter und der Tragarm nur in einer bestimmten Art und Weise zusammensetzbar sind, nämlich derart, dass die Bohrungen von Kupplungsteil, erster Mutter und Tragarm miteinander fluchten. Die Montage des gesamten Adapters ist dadurch vereinfacht und die Gefahr von Montagefehlern ist auf ein Minimum begrenzt. Sind das Kupplungsteil, die erste Mutter und der Tragarm miteinander montiert, wird nur noch die zweite Befestigungseinrichtung, die als Schraube ausgebildet ist, in die Bohrungen eingeschraubt.
Die Erfindung betrifft außerdem die Verwendung eines Adapters, umfassend ein Kupplungsteil mit einer ersten und einer zweiten Befestigungseinrichtung, die im Wesentlichen senkrecht zueinander angeordnet sind, für ein Aggregatelager mit vertikal angeordneter Verschraubung, und einen Tragarm mit zumindest einer dritten Befestigungseinrichtung, die im Wesentlichen senkrecht zur ersten Befestigungseinrichtung angeordnet ist. Die dritte Befestigungseinrichtung ist durch zumindest ein Durchgangsloch gebildet, mittels dessen ein Maschinenelement befestigbar ist. Das Kupplungsteil umfasst eine erste Mutter, die im Kupplungsteil im Wesentlichen zentral und drehfest angeordnet und mit der zweiten Befestigungseinrichtung in Eingriff bringbar ist. Das Kupplungsteil, die erste Mutter und der Tragarm weisen jeweils eine Bohrung auf, wobei die Bohrungen deckungsgleich und von der zweiten Befestigungseinrichtung zur Festlegung von Kupplungsteil, erster Mutter und Tragarm aneinander durchdrungen sind.

Aggregatelager mit vertikal angeordneter Verschraubung sind allgemein bekannt. Das Traglager eines solchen Aggregatelagers kann z. B. eine Sacklochbohrung mit Innengewinde aufweisen, so dass ein Aggregat mittels einer Schraube mit dem Aggregatelager verbunden werden kann.

Nach einer anderen Ausgestaltung kann das Aggregatelager einen vertikal angeordneten Gewindebolzen aufweisen. Das Aggregat kann zur Befestigung am Aggregatelager Durchbrechungen aufweisen, die von dem Gewindebolzen des Aggregatelagers durchdrungen werden, wobei das Aggregat und das Aggregatelager dann durch eine auf den Gewindebolzen aufgeschraubte zweite Mutter miteinander befestigt werden.

Aggregatelager gelangen z. B. zur Anwendung, um in Kraftfahrzeugen Verbrennungskraftmaschinen mit Karosserien zu verbinden. In Großserienfahrzeugen ist der Einbauraum für das Aggregat und die Aggregatelager zumeist ausreichend großzügig dimensioniert, so dass Aggregatelager mit vertikal angeordneter Verschraubung - ohne Adapter - zwischen dem Aggregat und der Karosserie angeordnet werden können.

Neben den Großserienfahrzeugen einer Baureihe gibt es manchmal in dieser Baureihe auch individuelle Fahrzeuge in kleiner Serie, in denen ebenfalls die Aggregatelager der Großserienfahrzeuge zur Anwendung gelangen sollen. Diese individuellen Fahrzeuge in kleiner Serie haben häufig besonders starke und in ihren Abmessungen große Motoren, so dass die Einbauverhältnisse für diese großen Motoren und auch für die zur Anwendung gelangenden Aggregatelager besonders beengt sind. In vielen dieser speziellen Anwendungsfälle ist es aus Gründen des eingeengten Bauraums nicht mehr möglich, das Aggregatelager mit vertikal angeordneter Verschraubung unmittelbar zwischen der Karosserie und dem Aggregat anzuordnen. In solchen Fällen sind bisher neue Lagerkonstruktionen entwickelt worden, die den beengten Einbauverhältnissen Rechnung tragen. Eine solche neue Lagerkonstruktion für eine nur kleine Serie ist in wirtschaftlicher Hinsicht sehr kostenaufwendig.

Der Erfindung liegt die Aufgabe zugrunde, dass Aggregatelager mit vertikal angeordneter Verschraubung, die als Großserienteile verwendet werden, auch dann zur Anwendung gelangen können, wenn aufgrund beengter Einbauverhältnisse keine unmittelbare Anordnung des Aggregatelagers zwischen den miteinander zu verbindenden Bauteilen möglich ist.

Durch den erfindungsgemäßen Adapter erfolgt die Verschraubung des Aggregatelagers am zu befestigenden Aggregat nicht mehr vertikal sondern horizontal. Durch die Verwendung des Adapters besteht sehr häufig die Möglichkeit, ein Großserien-Aggregatelager auch dann zu verwenden, wenn die Einbauverhältnisse sehr beengt sind. Der Adapter wird dabei an die vorhandene Anschraubstelle des Aggregatelagers angeschraubt. Die Verschraubung des Adapters mit dem Aggregatelager erfolgt in vertikaler Richtung. Die Verschraubung des zu lagernden Aggregats mit dem Aggregatelager erfolgt demgegenüber mittels des Adapters horizontal. Durch Verwendung des Adapters können erprobte Großserienlager auch in speziellen Kleinserien zur Anwendung gelangen, wobei der Adapter einfach und kostengünstig herstellbar ist und dadurch eine Adaption des Großserien-Aggregatelagers für die spezielle Kleinserie ebenfalls einfach und kostengünstig durchführbar ist.

Die Erfindung betrifft außerdem ein Aggregatelager mit vertikal angeordneter Verschraubung, umfassend ein Traglager und ein Auflager, die durch einen Federkörper aus gummielastischem Werkstoff miteinander verbunden sind und einen wie oben beschriebenen Adapter, wobei der Adapter mittels der ersten Befestigungseinrichtung am Traglager festgelegt ist.

Die zur Anwendung gelangenden Aggregatelager können durch an sich bekannte Hydrolager gebildet sein. Die Befestigung des Aggregatelagers in einer Fahrzeugkarosserie erfolgt z. B. durch das Auflager, die Befestigung des Aggregatelagers am abzustützenden Aggregat durch den Adapter, der am Traglager befestigt ist.
Das Traglager kann ein vertikal angeordnetes Sackloch mit Innengewinde aufweisen, das mit der als Schraube ausgebildeten ersten Befestigungseinrichtung des Adapters verbunden ist.

Nach einer anderen Ausgestaltung kann das Traglager einen vertikal angeordneten Gewindebolzen aufweisen, der die Durchbrechung des Adapters durchdringt, wobei der Gewindebolzen mittels einer zweiten Mutter mit dem Adapter verbunden ist.

### Kurzbeschreibung der Zeichnung

Drei Ausführungsbeispiele eines erfindungsgemäßen Adapters, die Bestandteile von erfindungsgemäßen Aggregatelagern sind, werden nachfolgend anhand der Figuren 1 bis 4 näher erläutert.

Diese zeigen jeweils in schematischer Darstellung:
- Fig.1: eine Explosionszeichnung des erfindungsgemäßen Aggregatelagers mit dem erfindungsgemäßen Adapter, jeweils aus Fig. 2, in perspektivischer Darstellung,
- Fig. 2: das erfindungsgemäße Aggregatelager mit dem erfindungsgemäßen Adapter aus Fig. 1 im zusammengebauten Zustand und in geschnittener Darstellung,
- Fig. 3: ein Aggregatelager, das als Hydrolager ausgebildet ist, mit einem Adapter, der mittels einer als Schraube ausgebildeten ersten Befestigungseinrichtung mit dem Traglager des Aggregatelagers verbunden ist, und
- Fig. 4: ein Aggregatelager mit Adapter ähnlich wie in Fig. 3, wobei das Traglager einen vertikal angeordneten Gewindebolzen aufweist, der die erste Befestigungseinrichtung des Adapters, die als Durchbrechung ausgebildet ist, durchdringt.

### Ausführung der Erfindung

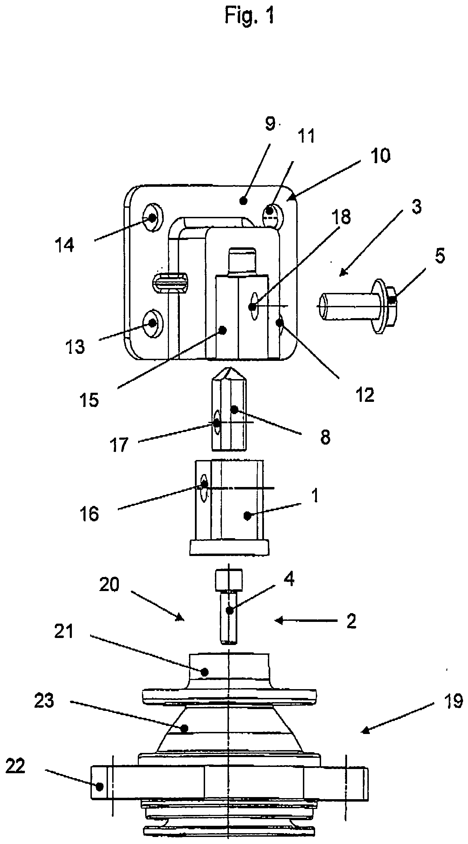

In Fig. 1 ist ein erstes Ausführungsbeispiel eines erfindungsgemäßen Aggregatelagers mit einem erfindungsgemäßen Adapter als Explosionszeichnung dargestellt.

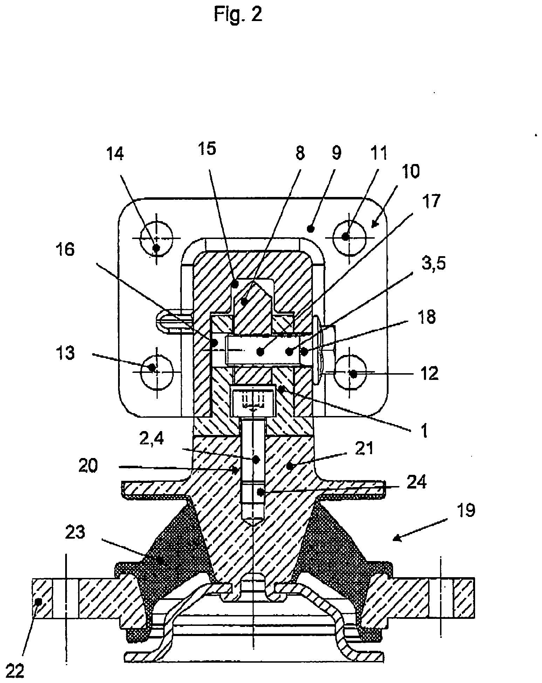

In Fig. 2 ist das Aggregatelager mit dem Adapter aus Fig. 1 im zusammengebauten Zustand und in geschnittener Darstellung gezeigt.

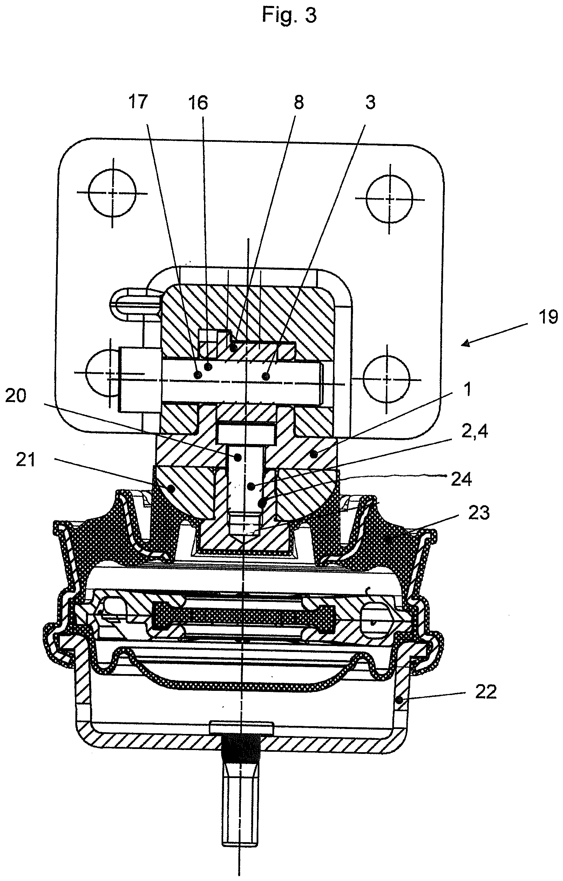

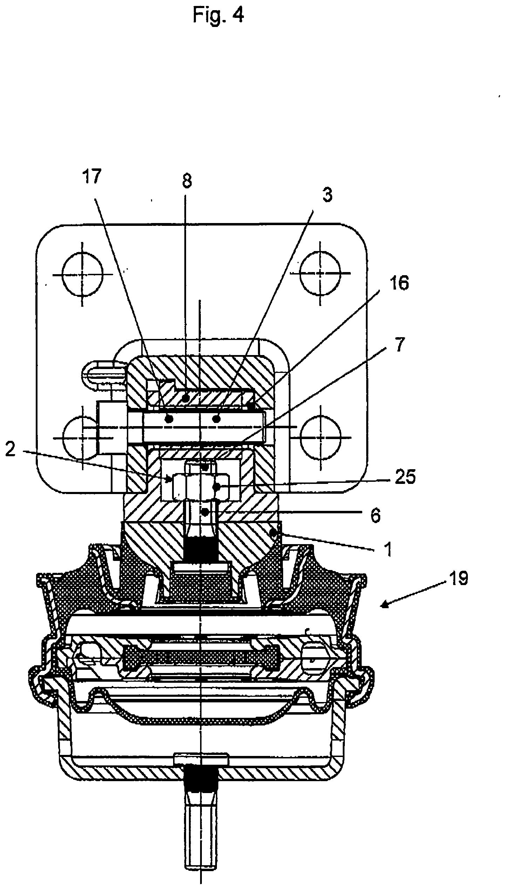

In den Fig. 1 und 2 weist das Aggregatelager 19 einen besonders einfachen Aufbau auf. Das Aggregatelager 19 umfasst das Traglager 21 und das Auflager 22, die durch den Federkörper 23, der aus einem gummielastischen Werkstoff besteht, miteinander verbunden sind. Davon abweichend können auch andere Aggregatelager zur Anwendung gelangen, beispielsweise Hydrolager, wie in den Fig. 3 und 4 dargestellt.

Das Aggregatelager 19 hat eine vertikal angeordnete Verschraubung 20, die dadurch gebildet ist, dass das Traglager 21 ein Sackloch mit Innengewinde 24 aufweist, in das die erste Befestigungseinrichtung 2 des Adapters in Form einer Schraube 4 eingeschraubt ist. Der Adapter umfasst das Kupplungsteil 1 und die im Kupplungsteil 1 im Wesentlichen zentral und drehfest angeordnete erste Mutter 8, wobei die erste Mutter 8 zur Sicherstellung der Verdrehfestigkeit polygonförmig ausgebildet ist.

In dem hier gezeigten Ausführungsbeispiel umfasst der Adapter zusätzlich zum Kupplungsteil 1 den Tragarm 9, der plattenförmig ausgebildet ist, und die Durchgangslöcher 11, 12, 13, 14 zur Befestigung eines Aggregats, z. B. einer Verbrennungskraftmaschine, aufweist. Der Tragarm 9 hat eine kuppelförmige Ausnehmung 15, mittels der der Tragarm 9 über das Kupplungsteil 1 stülpbar/gestülpt ist.

Die Befestigung des Tragarms 9 am Kupplungsteil 1 erfolgt durch die als zweite Befestigungseinrichtung 3 ausgebildete Schraube 5, die die Bohrung 18 des Tragarms 9 und die Bohrung 16 des Kupplungsteils 1 durchdringt und mit dem Innengewinde 24 der Bohrung 17 der ersten Mutter 8 verschraubt ist. Das Auflager 22 kann mit der Karosserie eines Kraftfahrzeugs verschraubt werden. Die Montage des Adapters mit dem Traglager 21 muss erfolgen, bevor die erste Mutter 8 in das Kupplungsteil 1 montiert und mit der zweiten Befestigungseinrichtung 3 in diesem befestigt wird; ist die erste Mutter 8 innerhalb des Kupplungsteils 1 montiert, ist die erste Befestigungseinrichtung 2 nicht mehr zugänglich.

In Fig. 3 ist ein zweites Ausführungsbeispiel des erfindungsgemäßen Aggregatelagers 19 gezeigt. Das Aggregatelager 19 ist in diesem Ausführungsbeispiel als übliches Hydrolager ausgebildet. Auch in diesem Ausführungsbeispiel umfasst der Adapter das Kupplungsteil 1 und die erste Mutter 8, die drehfest im Kupplungsteil 1 angeordnet ist. Zur Befestigung eines Aggregats wird eine Schraube 5, ähnlich wie im Ausführungsbeispiel der Fig. 1 und 2 gezeigt, in die erste Mutter 8 eingeschraubt und bildet zusammen mit dieser die zweite Befestigungseinrichtung 3. Der Tragarm 9 ist für eine horizontale Verschraubung eines Motorlagers notwendig, wenn die ursprüngliche Verschraubung vertikal ausgelegt war. Dieses Ausführungsbeispiel ist für niedrige Hydrolager mit flachen Aluminiumkernen gedacht,

In Fig. 4 ist ein drittes Ausführungsbeispiel eines erfindungsgemäßen Aggregatelagers 19 mit erfindungsgemäßem Adapter gezeigt. Das Aggregatelager 19 unterscheidet sich von dem Aggregatelager 19 aus Fig. 3 dadurch, dass die vertikal angeordnete Verschraubung 20 kein vertikal angeordnetes Innengewinde aufweist, das mit der als Schraube 4 ausgebildeten ersten Befestigungseinrichtung 2 des Adapters verbunden ist, sondern einen vertikal angeordneten Gewindebolzen 7, der in axialer Richtung aus dem Traglager 21 in Richtung des Adapters vorsteht. Der Gewindebolzen 7 durchdringt die Durchbrechung 6 des Adapters, wobei der Adapter mittels der zweiten Mutter 25 und dem Gewindebolzen 7 mit dem Traglager 21 des Aggregatelagers 19 verbunden ist.

Der Adapter selbst ist, mit Ausnahme der ersten Befestigungseinrichtung 2, entsprechend dem Adapter aus Fig. 3 ausgeführt. Auch in diesem Ausführungsbeispiel ist die erste Mutter 8 durch ihr polygonförmiges Profil drehfest innerhalb des Kupplungsteils 1 angeordnet, wobei die Achsen des Gewindebolzens 7 und der zweiten Mutter 25 senkrecht zueinander angeordnet sind.

In diesem Ausführungsbeispiel wird an einem Kern mit eingedrückter vertikaler Schraube ein Adapter für eine horizontale Verschraubung befestigt. Dabei muss für die zweite Mutter 25 unterhalb der ersten Mutter 8 hinreichend Freiraum um diese Mutter geschaffen werden, führt das Anziehen durch einen geeigneten Schlüssel. Die erste Mutter 8 ist an diesen Freiraum angepasst und daher länger ausgeführt.

In allen hier gezeigten Ausführungsbeispielen sind die Aggregatelager durch Gummi-Metall-Motorlager gebildet, in den Fig. 1 und 2 ohne, in den Fig. 3 und 4 mit hydraulischer Dämpfung. Die Traglager 21 der jeweiligen Aggregatelager haben jeweils eine vertikal angeordnete Verschraubung 20, wobei die gezeigten Aggregatelager 19 - jeweils ohne die Adapter - für die Montage in großer Serie geeignet und vorgesehen sind. Bei kleinen Serien, die einen besonders gestalteten Motor, z. B. durch andere/zusätzliche Nebenaggregate haben, soll nach Möglichkeit das gleiche Aggregatelager verwendet werden, was jedoch durch die anderen/beengten Einbauverhältnisse im Einbauraum ohne Verwendung des Adapters oft nicht möglich wäre. Vor der Endmontage werden die gezeigten Aggregatelager durch den Adapter komplettiert. Die gezeigten Tragarme 9 können entweder am Motor angeschraubt sein, über das Kupplungsteil 1 geschoben und dann mittels der Schraube 5, die die zweite Befestigungseinrichtung 3 bildet, verschraubt werden, oder der Tragarm 9 wird bereits vorher mit dem Kupplungsteil 1 verbunden, und anschließend wird der Motor dadurch mit dem Adapter verschraubt, dass Schrauben durch die Durchgangslöcher 11, 12, 13, 14 geschraubt werden.

Das Kupplungsteil 1 und die erste Mutter 8 bestehen in den Ausführungsbeispielen Fig. 1 bis 4 jeweils aus metallischen Werkstoffen, ebenso wie der Tragarm 9.

## Patentansprüche

1. Adapter für ein Aggregatelager (19), umfassend
ein Kupplungsteil (1) mit einer ersten (2) und einer zweiten Befestigungseinrichtung (3), die im Wesentlichen senkrecht zueinander angeordnet sind, und
einen Tragarm (9) mit zumindest einer dritten Befestigungseinrichtung (10), die im Wesentlichen senkrecht zur ersten Befestigungseinrichtung (2) angeordnet ist,
wobei die dritte Befestigungseinrichtung (10) durch zumindest ein Durchgangsloch (11) gebildet ist, mittels dessen ein Maschinenelement befestigbar ist,
**dadurch gekennzeichnet, dass** das Kupplungsteil (1) eine erste Mutter (8) umfasst, die im Kupplungsteil (1) im Wesentlichen zentral und drehfest angeordnet und mit der zweiten Befestigungseinrichtung (3) in Eingriff bringbar ist, und
dass das Kupplungsteil (1), die erste Mutter (8) und der Tragarm (9) jeweils eine Bohrung (16, 17, 18) aufweisen, wobei die Bohrungen (16, 17, 18) deckungsgleich und von der zweiten Befestigungseinrichtung (3) zur Festlegung von Kupplungsteil (1), erster Mutter (8) und Tragarm (9) aneinander durchdrungen sind.

2. Adapter nach Anspruch 1, **dadurch gekennzeichnet, dass** zumindest eine der Befestigungseinrichtungen (2, 3) durch eine Schraube (4, 5) gebildet ist.

3. Adapter nach einem der Ansprüche 1 bis 2, **dadurch gekennzeichnet, dass** beide Befestigungseinrichtungen (2, 3) jeweils durch eine Schraube (4, 5) gebildet sind.

4. Adapter nach einem der Ansprüche 1 bis 3, **dadurch gekennzeichnet, dass** die erste Befestigungseinrichtung (2) durch eine Durchbrechung (6) zur Durchführung eines Gewindebolzens (7) gebildet ist.

5. Adapter nach einem der Ansprüche 1 bis 4, **dadurch gekennzeichnet, dass** die erste Mutter (8) polygonförmig ausgebildet ist.

6. Adapter nach einem der Ansprüche 1 bis 5, **dadurch gekennzeichnet, dass** der Tragarm (9) plattenförmige ausgebildet ist und vier Durchgangslöcher (11, 12, 13, 14) aufweist.

7. Adapter nach einem der Ansprüche 1 bis 6, **dadurch gekennzeichnet, dass** der Tragarm (9) eine im Wesentlichen kuppelförmige Ausnehmung (15) aufweist, die das Kupplungsteil (1) außenumfangsseitig umschließt und dass der Tragarm (9) mittels der zweiten Befestigungseinrichtung (3) am Kupplungsteil (1) festlegbar ist.

8. Verwendung eines Adapters für ein Aggregatelager (19) mit vertikal angeordneter Verschraubung (20), **dadurch gekennzeichnet,**
**dass** der Adapter ein Kupplungsteil (1) mit einer ersten (2) und einer zweiten Befestigungseinrichtung (3), die im Wesentlichen senkrecht zueinander angeordnet sind, und einen Tragarm mit zumindest einer dritten Befestigungseinrichtung, die im Wesentlichen senkrecht zur ersten Befestigungseinrichtung angeordnet ist, umfasst, dass die dritte Befestigungseinrichtung (10) durch zumindest ein Durchgangsloch (11) gebildet ist, mittels dessen ein Maschinenelement befestigbar ist,
**dass** das Kupplungsteil (1) eine erste Mutter (8) umfasst, die im Kupplungsteil (1) im wesentlichen zentral und drehfest angeordnet und mit der zweiten Befestigungseinrichtung (3) in Eingriff bringbar ist, und
**dass** das Kupplungsteil (1), die erste Mutter (8) und der Tragarm (9) jeweils eine Bohrung (16, 17, 18) aufweisen, dass die Bohrungen (16, 17, 18) deckungsgleich und von der zweiten Befestigungseinrichtung (3) zur Festlegung von Kupplungsteil (1), erster Mutter (8) und Tragarm (9) aneinander durchdrungen sind.

9. Aggregatelager (19) mit vertikal angeordneter Verschraubung (20), umfassend ein Traglager (21) und ein Auflager (22), die durch einen Federkörper (23) aus gummielastischem Werkstoff miteinander verbunden sind und einen Adapter nach einem der Ansprüche 1 bis 7, wobei der Adapter mittels der ersten Befestigungseinrichtung (2) am Traglager (21) festgelegt ist.

10. Aggregatelager nach Anspruch 9, **dadurch gekennzeichnet, dass** das Traglager (21) ein vertikal angeordnetes Innengewinde (24) aufweist, das mit der als Schraube (4) ausgebildeten ersten Befestigungseinrichtung (2) des Adapters verbunden ist.

11. Aggregatelager nach Anspruch 9, **dadurch gekennzeichnet, dass** das Traglager (21) einen vertikal angeordneten Gewindebolzen (7) aufweist, der die Durchbrechung (6) durchdringt.

12. Aggregatelager nach Anspruch 10, **dadurch gekennzeichnet, dass** der Gewindebolzen (7) mittels einer zweiten Mutter (25) mit dem Adapter verbunden ist.

## Claims

1. Adapter for a power unit mount (19), comprising:
a coupling member (1) having a first fastening device (2) and a second fastening device (3) which are arranged substantially perpendicular to each other, and
a support arm (9) having at least one third fastening device (10) which is arranged substantially perpendicular to the first fastening device (2), wherein the third fastening device (10) is formed by at least one through hole (11) by means of which a machine element can be fastened,
**characterised in that** the coupling member (1) comprises a first nut (8) which is arranged substantially centrally and rotationally fixedly in the coupling member (1) and which can be engaged with the second fastening device (3), and
**in that** each of the coupling member (1), the first nut (8) and the support arm (9) have a bore (16, 17, 18), the bores (16, 17, 18) being congruent and being penetrated by the second fastening device (3) in order to fix the coupling member (1), the first nut (8) and the support arm (9) to one another.

2. Adapter according to claim 1, **characterised in that** at least one of the fastening devices (2, 3) is formed by a bolt (4, 5).

3. Adapter according to one of claims 1 to 2, **characterised in that** both fastening devices (2, 3) are each formed by a bolt (4, 5).

4. Adapter according to one of claims 1 to 3, **characterised in that** the first fastening device (2) is formed by an aperture (6) for the passage of a threaded bolt (7).

5. Adapter according to one of claims 1 to 4, **characterised in that** the first nut (8) is polygon-shaped.

6. Adapter according to one of claims 1 to 5, **characterised in that** the support arm (9) is plate-shaped and has four through-holes (11, 12, 13, 14).

7. Adapter according to one of claims 1 to 6, **characterised in that** the support arm (9) has a substantially dome-shaped recess (15) which surrounds the coupling member (1) on the outer circumferential side and **in that** the support arm (9) can be fixed to the coupling member (1) by means of the second fastening device (3).

8. Use of an adapter for a power unit mount (19) having a vertically arranged screw connection (20), **characterised in that** the adapter comprises a coupling member (1) having a first fastening device (2) and a second fastening device (3) arranged substantially perpendicular to each other and a support arm having at least one third fastening device arranged substantially perpendicular to the first fastening device,
**in that in that** the third fastening device (10) is formed by at least one a through hole (11), by means of which a machine element can be fastened,
**in that** the coupling member (1) comprises a first nut (8) which is arranged substantially centrally and rotationally fixedly in the coupling member (1) and which can be engaged with the second fastening device (3), and
**in that** each of the coupling member (1), the first nut (8) and the support arm (9) have a bore (16, 17, 18), and
**in that** the bores (16, 17, 18) are congruent and are penetrated by the second fastening device (3) in order to fix the coupling member (1), first nut (8) and support arm (9) to each other.

9. Adapter for a power unit mount (19) having a vertically arranged screw connection (20), comprising a support mount (21) and a support (22) which are connected to one another by means of a spring body (23) of elastomeric material, and an adapter according to one of claims 1 to 7, wherein the adapter is fixed to the support mount (21) by means of the first fastening device (2).

10. Power unit mount according to claim 9, **characterised in that** the support mount (21) has a vertically arranged internal thread (24) which is connected to the first fastening device (2) of the adapter formed in the shape of a screw (4).

11. Power unit mount according to claim 9, **characterised in that** the support mount (21) has a vertically arranged threaded bolt (7) which penetrates the aperture (6).

12. Power unit mount according to claim 10, **characterised in that** the threaded bolt (7) is fastened to the adapter by means of a second nut (25).

## Revendications

1. Adaptateur pour un palier de groupe (19), comportant une partie de couplage (1) ayant un premier moyen de fixation (2) et un second moyen de fixation (3) agencés sensiblement perpendiculairement l'un à l'autre, et
un bras porteur (9) ayant au moins un troisième moyen de fixation (10) qui est agencé sensiblement perpendiculairement au premier moyen de fixation (2),
le troisième moyen de fixation (10) étant formé par au moins un trou traversant (11) permettant de fixer un élément de machine,
**caractérisé en ce que**
la partie de couplage (1) comprend un premier écrou (8) qui est agencé sensiblement au centre et solidairement en rotation dans la partie de couplage (1) et qui est apte à venir en engagement avec le second moyen de fixation (3), et
**en ce que** la partie de couplage (1), le premier écrou (8) et le bras porteur (9) présentent chacun un perçage (16, 17, 18), les perçages (16, 17, 18) se chevauchant et étant traversés par le second moyen de fixation (3) pour immobiliser la partie de couplage (1), le premier écrou (8) et le bras porteur (9) les uns aux autres.

2. Adaptateur selon la revendication 1, **caractérisé en ce que** au moins l'un des moyens de fixation (2, 3) est formé par une vis (4, 5).

3. Adaptateur selon l'une des revendications 1 à 2, **caractérisé en ce que** les deux moyens de fixation (2, 3) sont formés chacun par une vis (4, 5).

4. Adaptateur selon l'une des revendications 1 à 3, **caractérisé en ce que** le premier moyen de fixation (2) est formé par une traversée (6) pour faire passer un boulon fileté (7).

5. Adaptateur selon l'une des revendications 1 à 4, **caractérisé en ce que** le premier écrou (8) est réalisé en forme polygonale.

6. Adaptateur selon l'une des revendications 1 à 5, **caractérisé en ce que** le bras porteur (9) est réalisé en forme de plaque et présente quatre trous traversants (11, 12, 13, 14).

7. Adaptateur selon l'une des revendications 1 à 6, **caractérisé en ce que** le bras porteur (9) présente un évidement (15) sensiblement en forme de dôme qui entoure la partie de couplage (1) du côté périphérie extérieure, et **en ce que** le bras porteur (9) est apte à être fixé à la partie de couplage (1) à l'aide du second moyen de fixation (3).

8. Utilisation d'un adaptateur pour un palier de groupe (19) comportant un raccord vissé agencé verticalement (20), **caractérisé en ce que**
l'adaptateur comprend une partie de couplage (1) ayant un premier moyen de fixation (2) et un second moyen de fixation (3) agencés sensiblement perpendiculairement l'un à l'autre, et un bras porteur ayant au moins un troisième moyen de fixation qui est agencé sensiblement perpendiculairement au premier moyen de fixation, **en ce que**
le troisième moyen de fixation (10) est formé par au moins un trou traversant (11) permettant de fixer un élément de machine, **en ce que**
la partie de couplage (1) comprend un premier écrou (8) qui est agencé sensiblement au centre et solidairement en rotation dans la partie de couplage (1) et qui est apte à venir en engagement avec le second moyen de fixation (3), et **en ce que**
la partie de couplage (1), le premier écrou (8) et le bras porteur (9) présentent chacun un perçage (16, 17, 18), les perçages (16, 17, 18) se chevauchant et étant traversés par le second moyen de fixation (3) pour immobiliser la partie de couplage (1), le premier écrou (8) et le bras porteur (9) les uns aux autres.

9. Palier de groupe (19) ayant un raccord vissé (20) agencé verticalement, comportant un palier porteur (21) et un support (22) qui sont reliés l'un à l'autre par un corps à effet ressort (23) constitué en un matériau présentant l'élasticité du caoutchouc, ainsi qu'un adaptateur selon l'une des revendications 1 à 7, l'adaptateur étant immobilisé sur le palier porteur (21) à l'aide du premier moyen de fixation (2).

10. Palier de groupe selon la revendication 9, **caractérisé en ce que** le palier porteur (21) comprend un taraudage (24) agencé verticalement qui est relié au premier moyen de fixation (2) réalisé sous forme de vis (4) de l'adaptateur.

11. Palier de groupe selon la revendication 9, **caractérisé en ce que** le palier porteur (21) comprend un boulon fileté (7) agencé verticalement qui traverse la traversée (6).

12. Palier de groupe selon la revendication 10, **caractérisé en ce que** le boulon fileté (7) est relié à l'adaptateur à l'aide d'un second écrou (25).
